# EUROPÄISCHE PATENTSCHRIFT

(11) **EP 2 293 938 B1**
(45) Veröffentlichungstag und Bekanntmachung des Hinweises auf die Patenterteilung: **28.08.2013**
(21) Anmeldenummer: 09769365.9
(22) Anmeldetag: 26.06.2009
(51) Int. Cl.: B32B 27/00

(54) **SCHAUMSTOFFLAMINAT**
FOAM LAMINATE
STRATIFIÉ DE MOUSSE

(30) Priorität: 26.06.2008 DE 102008002696
(43) Veröffentlichungstag der Anmeldung: 16.03.2011
(73) Patentinhaber: Trocellen GmbH, 53840 Troisdorf (DE); ATP Adhesive Systems AG, 8832 Wollerau (CH)
(72) Erfinder: ABECK, Volkmar, 50827 Köln (DE); FRANK, Michael, 53757 Sankt Augustin (DE); GIESEN, Ralf, 53797 Lohmar (DE); VAN STEENBERGEN, Axel, 42477 Radevormwald (DE)
(74) Vertreter: Wübken, Ludger
(86) Internationale Anmeldenummer: PCT/EP2009/058075
(87) Internationale Veröffentlichungsnummer: WO 2009/156517

(56) Entgegenhaltungen:
- DE-A1- 2 443 905

## Beschreibung

Die Erfindung betrifft ein Schaumstofflaminat mit einer flächigen Schaumstoffschicht auf der Basis von Polyolefinen und einem mit der Schaumstoffschicht teil- oder vollflächig verbundenes Transfer-Kleber-Laminat, wobei das Kleber-Laminat eine Trägerfolie, eine Kleberschicht und wenigstens eine Releasebeschichtung aufweist. Die Erfindung betrifft weiterhin die Verwendung eines solchen Schaumstofflaminats zur Herstellung eines dreidimensional geformten Flächengebildes, insbesondere eines sogenannten Watershields.

### Technisches Gebiet

Aus thermoverformbaren Flächengebilden hergestellte Formteile werden in großem Umfang z. B. in der Automobilindustrie eingesetzt, wo sie als Isolations- und Polstermaterialien eingesetzt werden. Ein typisches Beispiel ist der Einsatz von sog. "Watershields" aus Polyethylen-Schaumstoff als Schall- und Feuchtigkeitsisolierung in Automobiltüren. Es ist bekannt, Schaumstoff-Flächengebilde durch Thermoverformung - insbesondere durch Tiefziehverfahren - dreidimensional zu den gewünschten Formteilen zu formen und diese beispielsweise im Randbereich mit einem Kleber zu versehen, mit dem diese dreidimensional verformten Flächengebilde anschließend z. B. in einem Automobil angebracht werden. Da diese Formteile möglichst weitgehend vorfabriziert werden, wird der Kleber nicht unmittelbar vor dem Anbringen der Formteile im Automobil (Endmontage) aufgebracht, sondern bereits beim Zulieferer. Um ein Verkleben der einzelnen mit einem Kleber versehenen Formteile untereinander und ggf. ein Austrocknen oder Verschmutzen des Klebers und damit eine Verringerung der Klebefähigkeit zu verhindern, muss der Kleber beim Zulieferer mit beträchtlichem Aufwand sorgfältig mit speziellem Trennmaterial wie silikonisiertem Papier oder einer entsprechenden Kunststofffolie mit einer Releasebeschichtung abgedeckt werden. In der Praxis werden dabei häufig einzelne Stellen des Klebers nicht ausreichend abgedeckt, was bei engem Stapeln der Formteile zu deren Verkleben führt. Weiterhin behindert das Trennpapier ein enges Stapeln der einzelnen Formteile, so dass das Transportvolumen unnötig erhöht wird. Schließlich muss bei der Endmontage das Trennpapier o. dgl. wieder entfernt und entsorgt werden.

### Stand der Technik

Aus der WO 99/58372 A1 ist ein thermoverformbares Flächengebilde aus einem Schaumstoff auf Polyolefinbasis mit zwei im wesentlichen parallel zueinander verlaufenden Oberflächen, bekannt, bei dem eine der beiden Oberflächen des Flächengebildes vollflächig mit einer Folie kaschiert ist, die auf ihrer dem Schaumstoff abgewandten Seite eine Beschichtung aufweist, die als Trennmittel zu einem auf die andere Oberfläche des Flächengebildes aufzubringenden Klebemittel wirkt. Bei diesen bekannten thermoverformbaren Flächengebilden muss der Kleber nach der Thermoverformung - in der Regel im Randbereich - als Kleberraupe nachträglich aufgebracht werden, was naturgemäß mit hohem Aufwand verbunden ist.

### Aufgabe

Der Erfindung liegt daher die Aufgabe zugrunde, ein System zur Verfügung zu stellen, das diese Nachteile vermeidet.

### Darstellung der Erfindung

Die Erfindung löst diese Aufgabe durch ein Schaumstofflaminat nach Anspruch 1 bzw. durch den Einsatz eines Transfer-Kleber-Laminates nach Anspruch 8.

Die Reißdehnung (Bruchdehnung) im Sinne der vorliegenden Erfindung wird bei dem Schaum sowie der Trägerfolie des Transfer-Kleber-Laminates nach DIN 10798 gemessen.

Bei der Releasebeschichtung wird die Reißdehnung wie folgt ermittelt: Eine flächige, längliche Schaumstoffprobe aus geschlossenzelligem Polyethylenschaumstoff mit einer Dichte von 60 kg/m³ und 4 mm Dicke (Type Trocellen® C06004) wird mit einem Kleber-Laminat, bestehend aus einer Trägerfolie aus HDPE, Dicke 60µm, die ein- oder beidseitig beschichtet wurde mit der zu prüfenden Releasebeschichtung, sowie einen Reinacrylat-Kleber einer Schichtdicke von 100 µm, auf 170 °C erwärmt. Die erwärmten Proben werden in 10 %-Schritten einer einachsigen thermoplastischen Verformung (Dehnung) unterworfen, die erste Probe also mit einer bleibenden Dehnung von 10 %, die zweite einer bleibenden Dehnung von 20 % etc. Anschließend werden die Abzugskräfte der releasebeschichteten Trägerfolie von der Kleberschicht mit einem sogenannten Peeltest nach DIN 5001 gemessen und mit einer Nullprobe - Probe nur erwärmt, aber ohne thermoplastische Verformung - verglichen. Diejenige Probe mit der höchsten bleibenden Dehnung, bei der die Abzugskraft um höchstens 50 % über der Nullprobe liegt, bestimmt die Reißdehnung der Releasebeschichtung. Soweit die ermittelten Werte in Längs- und Querrichtung unterschiedlich sind, wird der jeweils geringste dieser Werte herangezogen.

Die Erfindung beruht im wesentlichen auf der Erkenntnis, dass ein Laminat, bei dem die Schaumstoffschicht, die Trägerfolie und insbesondere die Releasebeschichtung bei der üblichen Temperatur bei der Thermoverformung eine Reißdehnung aufweist, die höher ist als die höchsten bei der gewünschten Thermoverformung auftretenden Dehnungen, ohne Probleme entsprechen umgeformt werden kann. Liegt die Reißdehnung der Schaumstoffschicht, der Releasebeschichtung oder der Trägerfolie jedoch niedriger als die Dehnungen, die bei der Umformung bei der gewünschten Anwendung auftreten, lässt sich die Trägerfolie mit der gebrochenen Releasebeschichtung später nicht mehr problemlos von dem Schaumstoff-Kleber-Verbund ablösen.

Das erfindungsgemäß eingesetzte Transfer-Kleber-Laminat weist wenigstens einseitig, bevorzugt jedoch beidseitig eine Releasebeschichtung auf, die gegenüber dem eingesetzten Kleber nur eine geringe Haftung aufweisen. Bevorzugt wird für die Releasebeschichtung ein lösungsmittelhaltiges, thermisch vernetzendes Silikon eingesetzt. Diese grundsätzlich bekannten Silikontypen haben sich als besonders geeignet für die vorliegende Erfindung erwiesen, da sie unter den geforderten Bedingungen eine besonders hohe Reißdehnung aufweisen.

Das erfindungsgemäß eingesetzte Transfer-Kleber-Laminat weist bevorzugt Releasebeschichtungen auf, die, z. B. durch unterschiedlich große Zusätze an sogenannten Controle-Release-Additiven, eine unterschiedliche hohe Haftung zu der Kleberschicht aufweisen. Durch diese Ausgestaltung des Transfer-Kleber-Laminates kann dieses vorteilhaft in Form einer Wickelrolle eingesetzt werden. Beim Abrollen haftet die Kleberschicht an der Folienseite mit der höheren Haftkraft, während sich die andere Folienseite dank der geringeren Haftkraft leicht von der Rolle abwickeln kann.

Die Trennkraft der Release-Seite mit höherer Haftung weist - nach PA 3.1-33/Finat10 gemessen - bevorzugt eine Trennkraft von 5 bis 50 cN/10mm, insbesondere von 10 bis 30 cN/10mm auf, während die entsprechende Trennkraft der Release-Seite mit geringerer Haftung bevorzugt weniger als 50 %, insbesondere weniger als 20 % der Trennkraft der Release-Seite mit höherer Haftung aufweist.

Die erforderliche Reißdehnung von > 50 % bei 170 °C ist nur für die Releasebeschichtung mit der höheren Haftkraft gegenüber dem eingesetzten Kleber notwendig.

Die Releaseschichten weisen bevorzugt eine Dicke von 1 bis 10 µm, insbesondere 1,5 bis 4 µm auf.

Als Material für die Trägerfolie hat sich HDPE als besonders geeignet herausgestellt. Bevorzugt weist die eingesetzte Trägerfolie eine Dicke von 50 bis 150 µm, insbesondere von 70 bis 100 µm auf. Die Reißfestigkeit beträgt als Mittelwert zwischen Längs- und Querrichtung bevorzugt ≥ 20 N/mm² nach ISO 527-3/2/500, die entsprechende Bruchdehnung ≥ 350 %.

Als Material für die Kleberschicht wird bevorzugt ein Kleber auf Acrylatbasis, insbesondere ein Dispersionsreinacrylat eingesetzt. Die Schichtdicke des Klebers beträgt bevorzugt 50 bis 250 µm, insbesondere 70 bis 150 µm.

Das erfindungsgemäße Transfer-Kleber-Laminat wird bevorzugt in Form einer Wickelrolle eingesetzt. Zur Herstellung des Schaumstofflaminats wird bevorzugt ein chemisch oder physikalisch vernetzter Polyolefinschaumstoff, insbesondere ein Polyethylenschaumstoff, von einer Wickelrolle abgerollt und mit dem ebenfalls von einer Wickelrolle abgerollten Transfer-Kleber-Laminat verbunden, so dass ein vierschichtiges Schaumstofflaminat mit dem Polyethylenschaumstoff, der Kleberschicht, der ersten Releaseschicht mit höherer Haftung zum Kleber, der Trägerfolie und der zweiten Releaseschicht mit geringerer Haftung erzeugt wird. Die zweiten Releaseschicht mit geringerer Haftung hat nach dem Abrollen von der Transfer-Kleber-Laminat-Wickelrolle keine weitere Funktion mehr.

Dieses erfindungsgemäße Schaumstofflaminat kann bei den für vernetzten Polyolefinschaumstoff, insbesondere für Polyethylenschaumstoff üblichen Umformtemperaturen von beispielsweise 170 °C zu den gewünschten Endprodukten, beispielsweise einem sogenannten Watershield für Türen von Kraftfahrzeugen, verformt werden. Bei dieser thermischen Umformung wird das erfindungsgemäße Schaumstofflaminat üblicherweise örtlich unterschiedlich gedehnt, wobei maximale örtliche Dehnungen von > 50 %, insbesondere > 100 % auftreten können. Das erfindungsgemäße Transfer-Kleber-Laminat wird dabei mit verformt, ohne dass die Kleberschicht, die erste Releaseschicht mit höherer Haftung zum Kleber und die Trägerfolie selbst reißen. Die Formteile können problemlos gestapelt und transportiert werden. Erst unmittelbar vor der bestimmungsgemäßen Verwendung wird die Trägerfolie vom Kleber abgezogen und das verbleibende Formteil aus Schaumstoff mit einseitigem Kleberauftrag z. B. mit der Innenseite einer Karosserietür verklebt. Beim Abziehen der Trägerfolie vom Kleber verbleiben beide Releaseschichten an der Trägerfolie.

### Kurze Beschreibung der Zeichnung

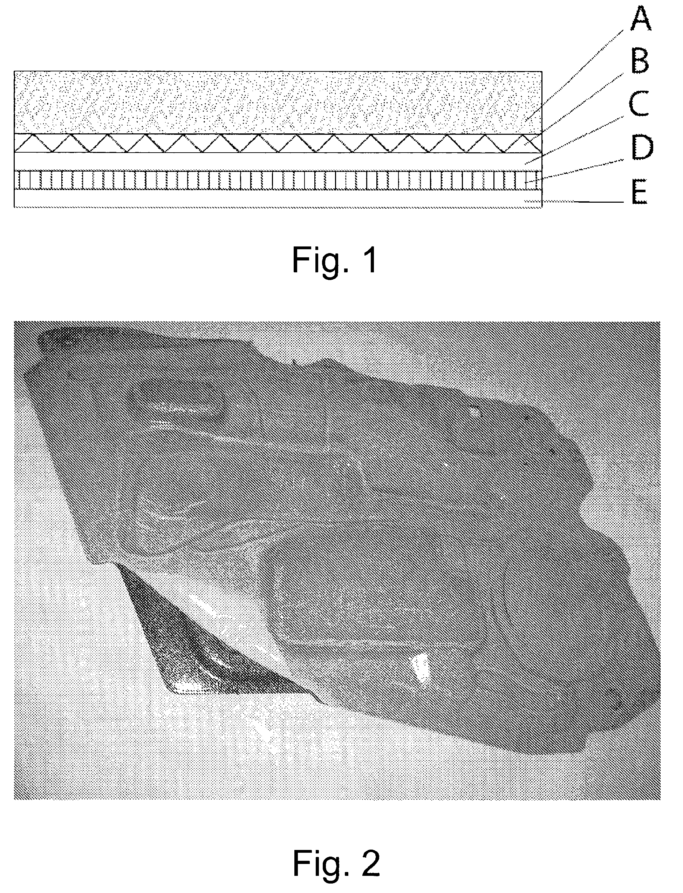

Die Erfindung wird nachfolgend anhand eines Ausführungsbeispiels sowie der Zeichnung näher erläutert. Es zeigen dabei:
- Fig. 1: einen nicht maßstäblichen Querschnitt durch ein erfindungsgemäßes Schaumstofflaminat;
- Fig. 2: ein Foto eines aus dem Schaumstofflaminat hergestellten thermoplastisch verformten Watershields.
Das in Fig. 1 dargestellte Schaumstofflaminat besteht aus der Schaumstoffschicht A und dem Transferkleberlaminat, das wiederum aus der Trägerfolie D, der ersten Releasebeschichtung D, der zweiten Releasebeschichtung E und der Kleberschicht B besteht. Als Schaumstoffschicht A wird ein geschlossenzelliger Polyethylenschaumstoff mit einer Dichte von 60 kg/m³ und 4 mm Dicke (Type Trocellen® C06004) eingesetzt. Als Trägerfolie D des Transfer-Kleber-Laminates wird eine HDPE-Folie D einer Dicke von 80 µm eingesetzt. Die Silikonisierung C besteht aus einer 2,5 µm dicken Schicht aus thermisch vernetztem Silikon, dass eine Trennkraft von 20 cN/10mm gegenüber dem Kleber aufweist, währen die Silikonisierung E aus einer 2,5 µm dicken Schicht aus thermisch vernetztem Silikon besteht, dass eine Trennkraft von 8 cN/10mm gegenüber dem Kleber aufweist. Als Kleber C wird eine 100 µm dicke Schicht eines Dispersionsreinacrylats eingesetzt.

Dieses Laminat wird auf 170 °C erwärmt und mittels Vakuum an eine Form angesaugt und danach abgekühlt. Dabei wird nicht nur der Schaumstoff, sondern auch das Transfer-Kleber-Laminat mit verformt. Das fertige dreidimensional verformte Flächengebilde kann als Watershield (Fig. 2) eingesetzt werden. Hierzu wird die Trägerfolie D mitsamt der Silikonisierung C von der Kleberschicht B abgezogen, so dass das dreidimensional verformte Flächengebilde auf eine Automobiltüre geklebt werden kann. In Fig. 2 ist die Trägerfolie D an einer Ecke des Watershields abgezogen, so dass hier die Kleberschicht B sichtbar wird.

## Patentansprüche

1. Schaumstofflaminat umfassend
- eine flächige Schaumstoffschicht auf der Basis von Polyolefinen,
- ein mit der Schaumstoffschicht teil- oder vollflächig verbundenes Transfer-Kleber-Laminat, wobei das Transfer-Kleber-Laminat wenigstens
• eine Trägerfolie aus thermoplastischem Kunststoff,
• wenigstens eine mit der Trägerfolie verbundene Releasebeschichtung,
• und eine zwischen Releasebeschichtung und Schaumstoffschicht angeordnete Kleberschicht aufweist,
wobei die Schaumstoffschicht, die Trägerfolie und die Releasebeschichtung bei einer Temperatur von 170 °C jeweils eine Reißdehnung von > 50 % (für Schaum und Trägerfolie gemessen nach DIN 10798; Reissdehung der Releasebeschichtung ermittelt wie in der Beschreibung definiert) aufweisen.

2. Schaumstofflaminat nach Anspruch 1, **dadurch gekennzeichnet, dass** die Schaumstoffschicht, die Trägerfolie und die Releasebeschichtung bei einer Temperatur von 170 °C jeweils eine Reißdehnung von > 100 %, insbesondere > 500 % aufweisen.

3. Schaumstofflaminat nach Anspruch 1 oder 2, **dadurch gekennzeichnet, dass** die Trägerfolie aus thermoplastischem Kunststoff beidseitig mit einer Releasebeschichtung versehen ist.

4. Schaumstoff-Laminat nach Anspruch 3, **dadurch gekennzeichnet, dass** die Releasebeschichtungen eine unterschiedliche Haftung zu der Kleberschicht aufweisen.

5. Schaumstoff-Laminat nach einem der Ansprüche 1 bis 4, **dadurch gekennzeichnet, dass** die Releasebeschichtungen im Wesentlichen ein thermisch vernetztes Silikon enthalten.

6. Schaumstoff-Laminat nach einem der Ansprüche 1 bis 5, **dadurch gekennzeichnet, dass** die Trägerfolie überwiegend aus HDPE besteht.

7. Schaumstofflaminat nach einem der Ansprüche 1 bis 6 in Form einer Wickelrolle.

8. Transfer-Kleber-Laminat für ein Schaumstofflaminat nach einem der Ansprüche 1 bis 7, mit einer Trägerfolie aus thermoplastischem Kunststoff, die auf einer Seite eine erste und auf der anderen Seite eine zweite Releasebeschichtung aufweist, und einer auf der ersten Releasebeschichtung angeordneten Kleberschicht, wobei die Trägerfolie und die erste Releasebeschichtung bei einer Temperatur von 170 °C jeweils eine Reißdehnung von > 50 %, insbesondere von > 200 % (Trägerfolie gemessen nach DIN 10798; Releasebeschichtung ermittelt wie in der Beschräbung definiert) aufweisen und wobei die Kleberschicht gegenüber der ersten Releasebeschichtung eine höhere Haftung als gegenüber der zweiten Releasebeschichtung aufweist.

9. Transfer-Kleber-Laminat nach Anspruch 8 in Form einer Wickelrolle.

10. Verwendung eines Schaumstofflaminats nach einem der Ansprüche 1 bis 7 zur Herstellung eines dreidimensional geformten Flächengebildes, insbesondere eines Watershields, durch thermoplastische Verformung des Schaumstofflaminats.

## Claims

1. Foam laminate comprising
- a sheetlike foamed layer based on polyolefins,
- a transfer-adhesive laminate connected to the foamed layer in a partly or wholly sheetlike manner and including at least
• a backing film of thermoplastic polymer,
• one or more than one release coating connected to the backing film,
• and an adhesive layer disposed between the release coating and the foamed layer,
wherein the foamed layer, the backing film and the release coating each have a breaking extension of > 50% (measured to DIN 10798 for the foam and the backing film and determined as defined in the description for the release coating) at a temperature of 170°C.

2. Foam laminate according to Claim 1, **characterized in that** the foamed layer, the backing film and the release coating each have a breaking extension of > 100%, especially > 500% at a temperature of 170°C.

3. Foam laminate according to Claim 1 or 2, **characterized in that** the backing film of thermoplastic polymer has a release coating on both sides.

4. Foam laminate according to Claim 3, **characterized in that** the release coatings differ in their adherence to the adhesive layer.

5. Foam laminate according to any one of Claims 1 to 4, **characterized in that** the release coatings contain essentially a thermally crosslinked silicone.

6. Foam laminate according to any one of Claims 1 to 5, **characterized in that** the backing film consists predominantly of HDPE.

7. Foam laminate according to any one of Claims 1 to 6 in the form of a wound roll.

8. Transfer-adhesive laminate for a foam laminate according to any one of Claims 1 to 7, with a backing film comprising thermoplastic polymer and having a first release coating on one side and a second release coating on the other side and with an adhesive layer disposed on the first release coating, wherein the backing film and the first release coating each have a breaking extension of > 50%, especially of > 200% (measured to DIN 10798 for the backing film and determined as defined in the description for the release coating) at a temperature of 170°C and wherein the adhesive layer has a higher adherence with regard to the first release coating than with regard to the second release coating.

9. Transfer-adhesive laminate according to Claim 8 in the form of a wound roll.

10. Use of a foam laminate according to any one of Claims 1 to 7 for producing a three-dimensionally formed sheetlike structure, especially a watershield, by thermoplastic forming of the foam laminate.

## Revendications

1. Stratifié de mousse, comprenant
- une couche de mousse plane à base de polyoléfines,
- un stratifié-adhésif-transfert lié à la couche de mousse sur une partie ou la totalité de la surface, le stratifié-adhésif-transfert comportant au moins
• un film de support à base de matière synthétique thermoplastique,
• au mois un revêtement antiadhésif lié au film de support,
• et une couche d'adhésif disposée entre revêtement antiadhésif et couche de mousse,
la couche de mousse, le film de support et le revêtement antiadhésif présentant chacun à une température de 170 °C un allongement à la rupture de > 50 % (mesuré pour la mousse et le film de support selon DIN 10798 ; allongement à la rupture du revêtement antiadhésif déterminé comme défini dans la description).

2. Stratifié de mousse selon la revendication 1, **caractérisé en ce que** la couche de mousse, le film de support et le revêtement antiadhésif présentent chacun à une température de 170 °C un allongement à la rupture de > 100 %, en particulier > 500 %.

3. Stratifié de mousse selon la revendication 1 ou 2, **caractérisé en ce que** le film de support à base de matière synthétique thermoplastique est muni des deux côtés d'un revêtement antiadhésif.

4. Stratifié de mousse selon la revendication 3, **caractérisé en ce que** les revêtements antiadhésifs présentent une adhérence différente à la couche d'adhésif.

5. Stratifié de mousse selon l'une quelconque des revendications 1 à 4, **caractérisé en ce que** les revêtements antiadhésifs contiennent essentiellement un silicone réticulé thermiquement.

6. Stratifié de mousse selon l'une quelconque des revendications 1 à 5, **caractérisé en ce que** le film de support est constitué principalement de HDPE.

7. Stratifié de mousse selon l'une quelconque des revendications 1 à 6, sous forme d'un rouleau enroulé.

8. Stratifié-adhésif-transfert pour un stratifié de mousse selon l'une quelconque des revendications 1 à 7, comportant un film de support à base de matière synthétique thermoplastique, qui comporte d'un côté un premier et de l'autre côté un second revêtement antiadhésif, et une couche d'adhésif disposée sur le premier revêtement antiadhésif, le film de support et le premier revêtement antiadhésif présentant chacun à une température de 170 °C un allongement à la rupture de > 50 %, en particulier de > 200 % (film de support mesuré selon DIN 10798 ; revêtement antiadhésif déterminé comme défini dans la description) et la couche d'adhésif présentant vis-à-vis du premier revêtement antiadhésif une plus forte adhérence que vis-à-vis du second revêtement antiadhésif.

9. Stratifié-adhésif-transfert selon la revendication 8, sous forme d'un rouleau enroulé.

10. Utilisation d'un stratifié de mousse selon l'une quelconque des revendications 1 à 7, pour la production d'un article plan mis en forme en trois dimensions, en particulier d'un déflecteur d'eau, par formage thermoplastique du stratifié de mousse.
